# EUROPEAN PATENT SPECIFICATION

(11) **EP 1 273 105 B1**
(45) Date of publication and mention of the grant of the patent: **15.03.2006**
(21) Application number: 00922033.6
(22) Date of filing: 11.04.2000
(51) Int. Cl.: H04B 7/26

(54) **METHOD AND SYSTEM EMPLOYING WIRELESS IN-BAND SIGNALING FOR DOWNLINK TRANSMISSION OF COMMANDS**
VERFAHREN UND SYSTEM ZUR ÜBERTRAGUNG VON BEFEHLEN IN ABWÄRTSRICHTUNG UNTER VERWENDUNG VON DRAHTLOSER INBAND-SIGNALISIERUNG
PROCEDE ET SYSTEME UTILISANT LA SIGNALISATION INTRABANDE SANS FIL POUR LA TRANSMISSION DE COMMANDES PAR LIAISON DESCENDANTE

(43) Date of publication of application: 08.01.2003
(73) Proprietor: AirNet Communications Corporation, Melbourne, FL 32934 (US)
(72) Inventor: KOMARA, Michael A., Satellite Beach, Florida 32937 (US); SCHMUTZ, Thomas R., Indialantic, FL 32903 (US); OVERTON, Roger, L., Huntington Station, NY 11746-3517 (US)
(74) Representative: Dendorfer, Claus
(86) International application number: PCT/US2000/009600
(87) International publication number: WO 2001/078249

(56) References cited:
- WO-A-00/31896
- WO-A-01/48945
- WO-A-97/06611
- US-A- 4 759 051
- US-A- 5 095 528
- US-A- 5 425 076
- US-A- 5 726 980
- US-A- 5 953 637
- US-A- 5 970 406
- US-A- 5 974 325
- US-B1- 6 690 662

## Description

### FIELD OF THE INVENTION

This invention relates generally to wireless communication systems. More specifically, this invention relates to remote repeaters in wireless communication systems and in particular to a method and apparatus for employing in-band signaling for downlink transmission of commands and uplink transmission of status in a wireless system repeater.

### BACKGROUND OF THE INVENTION

As demand increases dramatically for wireless communication services such as Global System for Mobile Communications (GSM), Cellular Mobile Telephone (CMT), and Personal Communication Services (PCS), the operators of such systems are required to serve an increasing number of users. As a result, a type of base station equipment known as a multicarrier broadband Base Transceiver System (BTS) has been developed which is intended to serve a large number of active mobile stations in each cell. Such broadband BTS equipment can typically service ninety-six simultaneously active mobile stations, at a significant cost per channel.

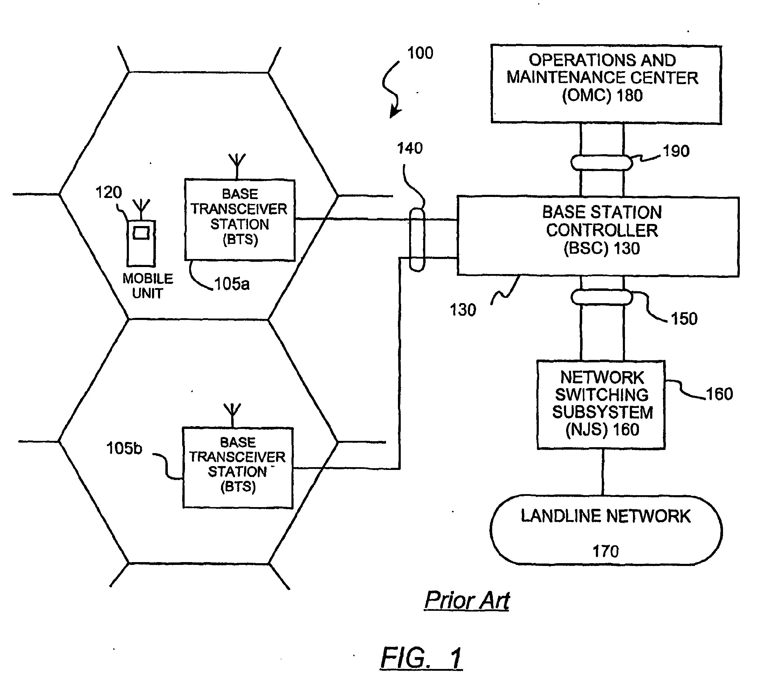

A conventional cellular phone system **100** is shown in Fig. 1. As illustrated in Fig. 1, the cellular phone system **100** includes a plurality of cells **110a, 110b,** a mobile unit **120,** a plurality of broadband base transceiver stations (BTS) **105a, 105b,** dedicated telephone lines **140,** a base station controller (BSC) **130,** an A interface **150,** a Network and Switching Subsystem (NSS) **160** and a landline switched telephone network **170.** An Operations and Maintenance Center (OMC) **180** is connected to BSC **130** through a Network Management Interface **190.**

The cellular phone system **100** has a fixed number of channel sets distributed among the BTS **105a, 105b** serving a plurality of cells **110a, 110b** arranged in a predetermined reusable pattern. Maximum utilization efficiency of the BTS **105** in densely populated urban environments can be obtained through an efficient frequency reuse scheme, such as that described in U.S. patent No. 5,649,292 entitled "A Method For Obtaining Times One Frequency Reuse in Communication Systems" issued to John R. Doner and assigned to AirNet Communications Corporation, who is the assignee of the present application. According to that arrangement, each cell is split into six radial sectors and frequencies are assigned to the sectors in such a manner as to provide the ability to reuse each available frequency in every third cell. Although this frequency reuse scheme is highly efficient, it requires at least two complete multicarrier broadband base transceiver systems (BTS) to be located in each cell. Such a configuration results in dramatically increased hardware installation costs for each cell.

Returning to Fig. 1, the mobile unit **120,** in a cell **110a** or **110b,** communicates with the BTS **105a** or **105b** via radio frequency (RF) means, specifically employing one of the fixed number of channels. The BTS **105a, 105b** communicate with the BSC **130** via dedicated telephone lines **140.** The BSC **130** communicates with the NSS **160** via the A interface **150.**

In the cellular phone system **100,** the cell areas typically range from 1 to 300 square miles. The larger cells typically cover rural areas, and the smaller cells typically cover urban areas. Cell antenna sites utilizing the same channel sets are spaced by a sufficient distance to assure that co-channel interference is held to an acceptably low level.

The mobile unit **120** in a cell **110a** has radio telephone transceiver equipment which communicates with similar equipment in BTS **105a, 105b** as the mobile unit **120** moves within a cell or from cell to cell.

Each BTS **105a, 105b** relays telephone signals between mobile units **120** and a mobile telecommunications switching office (MTSO) **130** by way of the communication lines **140.**

The communication lines **140** between a cell site, **110a** or **110b,** and the MTSO **130,** are typically T1 lines. The T1 lines carry separate voice grade circuits for each radio channel employed at the cell site and data circuits for switching and other control functions.

While the cellular communications system arrangement of Fig. 1 is cost effective to deploy when a large number of active mobile stations is expected in each cell, it is not particularly cost effective in most other situations. For example, during an initial system build out phase, a service provider ordinarily does not need to use a large number of radio channels. It is therefore typically not possible to justify the cost of deploying complex multicarrier broadband transceiver system equipment based only upon the initial number of subscribers. As a result, the investment in conventional broadband multicarrier radio equipment may not be justified until such time as the number of subscribers increases to a point where the channels are busy most of the time. Furthermore, many areas exist where the need for wireless communication systems is considerable, but where signal traffic can be expected to remain low indefinitely (such as in rural freeway locations or large commercial/industrial parks) . Because only a few cells at locations of high traffic demand (such as in a downtown urban location or a freeway intersection) will justify the initial expense of building out a network of high capacity broadband transceiver systems, the service provider is faced with a dilemma. He can build-out the system with less expensive narrowband equipment initially, to provide some level of coverage, and then upgrade to the more efficient equipment as the number of subscribers rapidly increases in the service area. However, the initial investment in narrowband equipment is then lost. Alternatively, a larger up front investment can be made to deploy the high capacity equipment at the beginning, so that once demand increases, the users of the system can be accommodated without receiving busy signals and the resultant blocked calls. But this has the disadvantage of requiring a larger up-front investment.

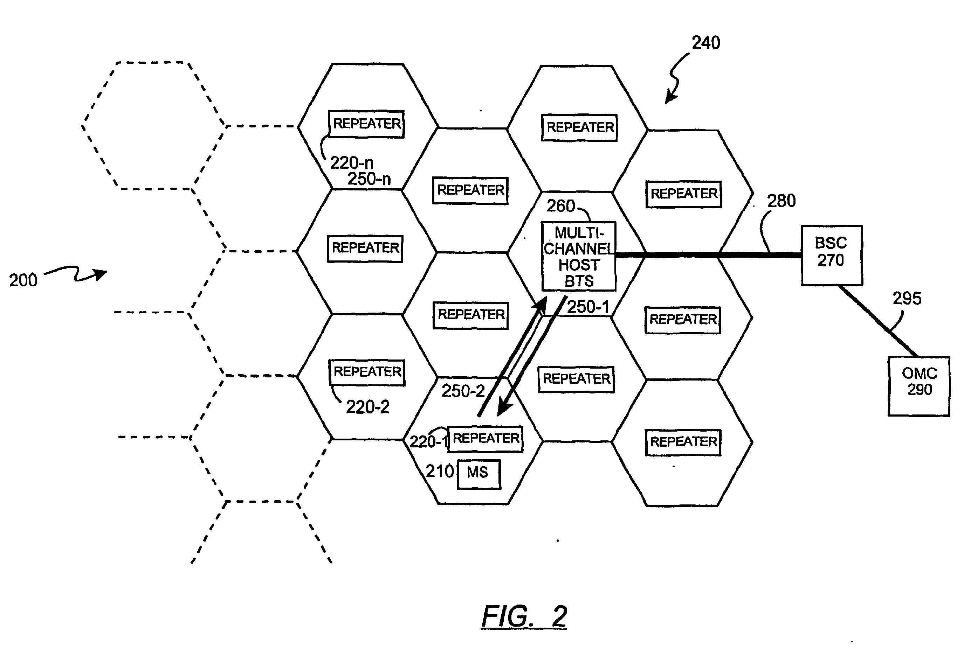

These concerns have led to the increased popularity of wireless repeaters, which can increase the capacity of cells without requiring the expense or complication of a multicarrier broadband BTS for each cell. Fig. 2 is a block diagram of the components of a wireless communication system that makes use of wireless repeaters.

Fig. 2 illustrates a wireless communication system **200** such as a Cellular Mobile Telephone, Personal Communication System (PCS), or similar system in which employing slot-by-slot diversity selection in the uplink signal paths of a wireless system repeater translator enables proper demodulation at the BTS of signals received from remote repeater base stations deployed in peripheral cells.

The system **200** provides voice and or data communication between mobile stations **210** and a Public Switched Telephone Network (PSTN) (not shown) via radio signals. In the particular embodiment of the invention being described, the radio signaling protocol, or "air interface," uses a Time Division Multiple Access (TDMA) technique such as the GSM-1900 (formerly PCS-1900) standard promulgated by the Telecommunications Industry Association (TIA) in the United States which adopts all relevant aspects of the Global System for Mobile Communication (GSM) standard developed by the Groupe Special Mobile, and promulgated in Europe and elsewhere by the European Telecommunication Standards Institute (ETSI).

The remotely located repeaters **220-1, 220-2,..., 120-n** (also referred to herein as the "remote base stations") are each located in what is normally to be approximately the center of a group or cluster **240** of cells comprising individual cell sites **250-1, 250-2,..., 250-n.** The remotely located repeaters **220** receive radio signals from the mobile stations **210** located in their respective cells **250** and forward these signals to the associated multichannel host broadband Base Transceiver System (BTS) **260.** Likewise, radio signals originating at the host BTS **260** are forwarded by the repeaters **220** to the mobile stations **210.** As a result, the signals associated with all of the mobile stations **210** located within the cluster **240** of cells **250-1,..., 250-n** are thereby processed at the host BTS **150.**

The remotely located repeaters **220** can be used to extend the coverage of a single cell, or they can be configured as "base stations" in the sense that they are each associated with a particular cell **250** and in that they each receive and transmit multiple signals from and to the mobile stations **210.** However, the remotely located repeaters **220** do not perform demodulation and modulation functions as does a conventional base station. Rather, in their most basic form, they serve only to amplify signals received from the mobile stations **210** and then direct such signals to the multichannel host BTS **260.** More complex versions of remote repeaters perform frequency translation as well as amplification of the signals received from the mobile stations **210,** and subsequently direct those amplified and translated signals on a different frequency to the multichannel host BTS **260.** When the frequencies employed by the remote repeaters **220** are all within the frequency band allocated to the cell cluster **240,** the repeaters **220** are considered "in-band" frequency translating repeaters. The remotely located repeaters **220** also perform the inverse function, receiving signals from the host BTS **260** and then directing them to the mobile stations **210**, including frequency translation.

Also shown in Fig. 2, the multichannel host BTS 260 is connected to a Base Station Controller **270** through an A Interface **280,** and the BSC **270** is connected to an Operations and Maintenance Center (OMC) **290** through a Network Management Interface **295.** In any conventional wireless communications system, whether it employs remotely located repeaters or not, the OMC **290** receives alarms and status-indicating signals from and sends commands to the base stations, whether they are representative of a multichannel host BTS **260** or a remotely located repeater base station **220.** The OMC **290** typically communicates with several base station controllers **270.**

In the wireless communications systems of the prior art, in order to conduct such two-way communications between the remote repeaters **220** and the OMC **290**, a dedicated telephone line is required. Even in the case where the OMC **290** is physically co-located with the Base Station Controller **270,** such an installation requires that a modem be installed in the remote repeater **220,** and that telephone line installation and subscription and maintenance charges be incurred. These charges can be substantial, considering that a single OMC **290** can communicate with several BSCs **270.** Whereas remotely located wireless repeaters **220** use RF, backhaul signals to communicate with a host BTS **260,** landline repeaters are connected to a.host BTS by a wireline connection. Landline repeaters have successfully employed a solution to the problem of status-indicating signal and alarm monitoring. US Patent 5,422,929 ('929) to Hurst et al. describes a method and apparatus for remotely testing and monitoring a landline repeater. A central office will send an interrogating signal with an address subfield. When the interrogating signal is recognized by a controller in the landline repeater, the controller causes the landline repeater to enter a loopback mode where diagnostic and test-indicative no-operation signals are returned. For a given landline, any repeater attached to the landline could be addressed and tested. Although '929 describes the testing and monitoring for landline repeaters through the existing landline communication channel, '929 does not describe the testing and monitoring through a wireless communication channel and testing of the uplink and downlink paths of a wireless repeater.

US Patent 5,784,406 ('406) to DeJaco *et al.* describes a method and apparatus for testing through a wireless communication channel. In the '406 patent, a test signal is generated from a monitoring station located on a PSTN. The test signal is routed through the PSTN to a cellular communication system to a cellular phone. The test signal activates a loopback element within the cellular phone and the signal is re-routed back to the monitoring station. The monitoring station performs an analysis on the returned- test signal.

Although the '406 patent describes the use of the loopback element in a mobile cellular phone through a wireless communication channel, '406 fails to disclose this loopback element for a wireless repeater. Furthermore, '406 fails to disclose how to implement this testing for a repeater and for testing the uplink and downlink paths of the wireless repeater.

It is thus readily seen that a need exists for a method of transmitting signals and for monitoring status-indicating signals and alarms between the OMC. **290** and multiple remote repeater stations **220** without requiring the installation and use of modems and dedicated telephone lines.

U.S. Patent No. 5,953,637 discloses an approach to extend TDMA system coverage by locating in-band translator components in the center of remote cells which would normally contain a base transceiver system (BTS). The in-band translators include a loop-back circuit that permits a host BTS to measure the propagation time delay by sending test access signals between the host BTS and each in-band translator.

### DESCRIPTION OF THE INVENTION

### Objects of the Invention

It is an object of this invention to provide wireless signaling between an Operations and Maintenance Center and multiple remotely located repeater stations.

Another object is to provide for wireless downlink transmission of commands from an Operations and Maintenance Center to multiple remotely located repeater stations.

A further object is to provide for wireless uplink transmission of status and alarm signals to an Operations and Maintenance Center from multiple remotely located repeater stations.

It is yet another object of this invention to conduct such wireless signaling in-band, via the downlink and uplink RF paths.

### Summary of the invention

The present invention is defined by the independent claims. The dependent claims concern optional features of some embodiments of the present invention.

Briefly, the invention is predicated on an architecture for a wireless communication system in which cells are grouped into clusters. A host cell location is identified within each cluster and a multicarrier broadband Base Transceiver System (BTS) is located at or near the host cell site.

Rather than deploy a complete suite of base station equipment at each remaining cell in the cluster, translating radio transceivers are located in the remote cells. In a preferred embodiment of the present invention, these translating radio transceivers operate in-band, that is, within the frequencies assigned to the service provider.

The repeaters operate in both an uplink and downlink direction. That is, uplink signals transmitted by a mobile station located in a remote cell are received at the repeater and then transmitted to the host BTS. Likewise, downlink signals transmitted by the host BTS are first received by the repeater and then transmitted to the mobile stations at high power.

The remotely located repeater has frequency shift key (FSK) detection and demodulation capability incorporated in the downlink path, while it also has FSK modulation capability incorporated in the uplink path. This allows for the repeater to extract commands from the serving BTS downlink and act upon them. It also allows for the repeater to transmit status/alarms back to the serving BTS via the uplink. The BTS can then communicate these commands, status-indicating signals, and alarms with the Operations and Maintenance Center.

During normal operation, a modulated Gaussian Minimum Shift Key (GMSK) carrier from the BTS is continuously transmitted in the "backhaul" downlink to the remotely located repeater. This signal is received by the repeater via a directional antenna, and transmitted via an omni-directional antenna to the mobile handset. The signal transmitted from the repeater to the mobile unit is referred to as the remote "ground" downlink signal.

The handset returns its signal via the remote "ground" uplink path to the repeater, where it is typically received via two omni-directional antennas. In the preferred embodiment, the repeater performs diversity selection and automatic level control (ALC) either through delay diversity combining or on a slot-by-slot switched diversity basis. This uplink signal is transmitted to the BTS via a directional antenna.

When an RF loopback test is desired, a "signaling waveform," such as a continuous wave (CW) tone, is transmitted over the "backhaul" downlink from the BTS to the remotely located repeater for a pre-determined amount of time. Phase/frequency discrimination circuitry is used to detect the change to a signaling waveform (e.g. CW carrier) from a modulated carrier, e.g. GMSK. The presence of the signaling waveform instructs the repeater to enter its RF loopback mode.

When in the RF loopback mode, a coupled sample of the high-power downlink transmit signal is attenuated, downconverted in frequency to the receive band, and coupled into both of the uplink low-noise input receive paths. The downlink backhaul carrier from the BTS is then modulated with "training bit" data to allow for accurate timing of the round-trip delay and path loss when the RF loopback signal is received over the uplink backhaul by the BTS. In the event of an alarm -condition within any function of the repeater, the signal will not be looped back to the BTS and a system alarm will be directed to the Operations and Maintenance Center.

While the repeater is in the Loopback mode, the phase/frequency discrimination circuitry can also be used to detect phase/frequency-modulated downlink data (such as FSK) and the detected data bits can be interpreted by the repeater's microcontroller and acted upon. The downlink data can be used to re-configure various tuning frequency and target gain parameters.

Further, while the repeater is in the Loopback mode, the status-indicating and alarm data can also be sent back via the uplink path to the BTS. A simple phase/frequency modulation component can be switched or coupled into the uplink path and used to FSK-modulate data supplied by the repeater's microcontroller. This data can include internal status and alarm signals monitored by the repeater's microcontroller.

### Brief Description Of The Drawings

For a more complete understanding of the invention and its novel advantages and features, reference should be made to the accompanying drawings in which:
Fig. 1 is a block diagram of a conventional prior art wireless telecommunications system;
Fig. 2 is a view of a cell site cluster showing how a host Base Transceiver System (BTS), in-band translators, and mobile stations are deployed in a prior art wireless telecommunications system;
Fig. 3 is a block diagram of a wireless telecommunications system employing a preferred embodiment of the repeater of the present invention;
Fig. 4 is a detailed block diagram of a repeater embodying the present invention in a GSM-1900 system.

### DETAILED DESCRIPTION OF A PREFERRED EMBODIMENT

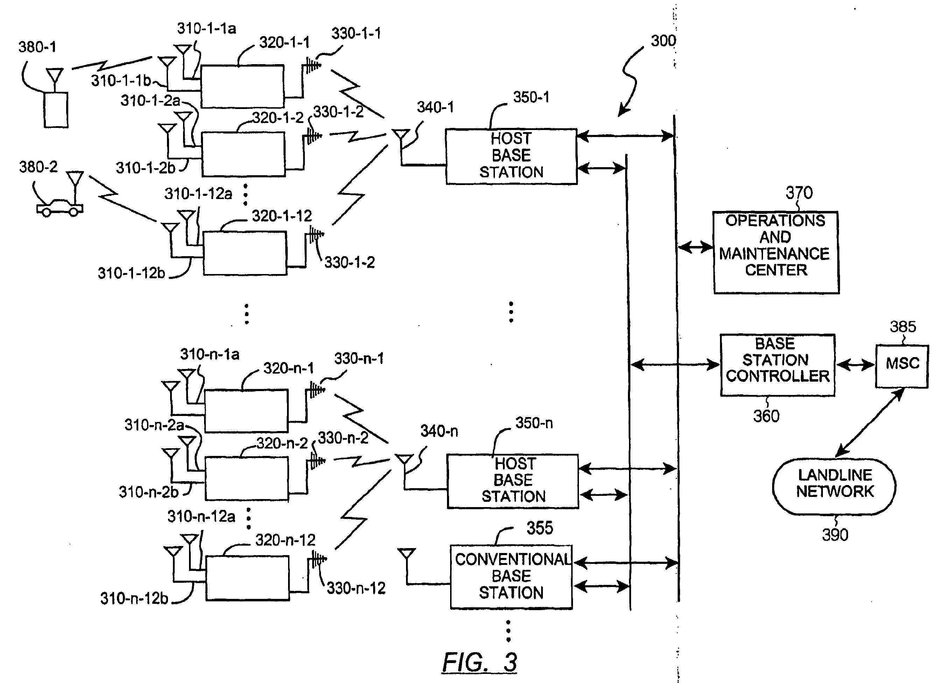

Turning attention now to Fig. 2, the system 300 more particularly includes pairs of translator omni-directional antennas **310-1-1a** and **310-1-1b,..., 310-1-12a** and **310-1-12b,..., 310-n-1a** and **310-n-1b**,..., **310-n-12a** and **310-n-12b** (collectively, the omni-directional antennas **310**). The antenna pairs are connected to remotely located repeaters configured in the preferred embodiment as in-band translator base stations (wireless translating range extenders) **320-1-1,..., 320-1-12,..., 320-n-1,..., 320-n-12,** translator base station directional antennas (backhaul antennas) **330-1-1,..., 330-1-12, 330-n-1,..., 330-n-12,** host base station omni-directional antennas **340-1,..., 340-n,** and multichannel host Base Transceiver Systems (BTS) **350-1,..., 350-n.** In the preferred embodiment of Fig. 3, the system 300 may also include one or more conventional base stations **355,** in addition to the multichannel host Base Transceiver Systems (BTS) **350-1,..., 350-n.** The system **300** also includes one or more base station controllers **360,** an Operations and Maintenance Center **370,** and mobile stations **380-1, 380-2.** The system **300** also includes a Mobile Switching Center 385 connected to a Landline Network **390.**

The host BTSs **350-1,..., 350-n** are responsible for demodulating radio signals as well as for connecting such signals to the landline network 390 through the one or more base station controllers **360** and the mobile switching center **385.** The landline network is typically a Public Switched Telephone Network (PSTN) or an Integrated Service Digital Network (ISDN), but it may also be a Public Land Mobile Network (PLMN), or a Packet Switched Data Network (PSDN). In the reverse direction; the host BTSs **350-1, 350-n** also modulate signals received from the landline network through the mobile switching center **370** to format them for transmission over the air through the inband translators **320.**

Regarding the arrangement of the multichannel host BTS **350-1..., 350n,** each particular host BTS, e.g. multichannel host BTS **350-1** serves the multiple in-band translators associated with a given cluster **240** of cells **250,** e.g. in-band translators **320-1-1,..., 320-1-12.** In the embodiment disclosed in Fig. 3, each multichannel host BTS **350-1** and **350-n** is depicted as serving its maximum number of twelve in-band translators **320-1-1,...,320-1-12,** and **320-n-1, ..., 320-n-12,** respectively.

The Base Station Controller (BSC) **360,** of which there may be more than one, has a number of functions. The primary function is to manage the logical connections made between mobile stations **380** and the landline network. In order to do so, the Base Station Controller **360** assigns transmit and receive radio carrier frequencies to each individual mobile station **380,** in-band translator **320,** and host BTS **350.** Typically, there may be five to twenty multichannel host BTSs **350-1,..., 350-n** serviced by a single Base Station Controller **360.**

United States patent number **5,537,435** entitled "Transceiver Apparatus Employing Wideband FFT Channelizer with Output Sample Timing Adjustment and Inverse FFT Combiner for a Multichannel Communication Network" issued July 16, 1996 and which is assigned to AirNet Communications Corporation, the assignee of this application, describes the details of several embodiments of the multichannel BTS **350.**

Further, the Base Station Controller **360** controls communication between the components of system **300** and the OMC **370.** Specifically with regard to the repeaters **320** of the present invention, OMC **370** receives alarms and status-indicating signals from, and transmits commands to, in-band translating repeaters **320.** Whereas this communication is typically conducted via dedicated telephone lines, which requires that a modem be installed in each remotely located repeater **320,** the present invention accomplishes such signaling through wireless techniques.

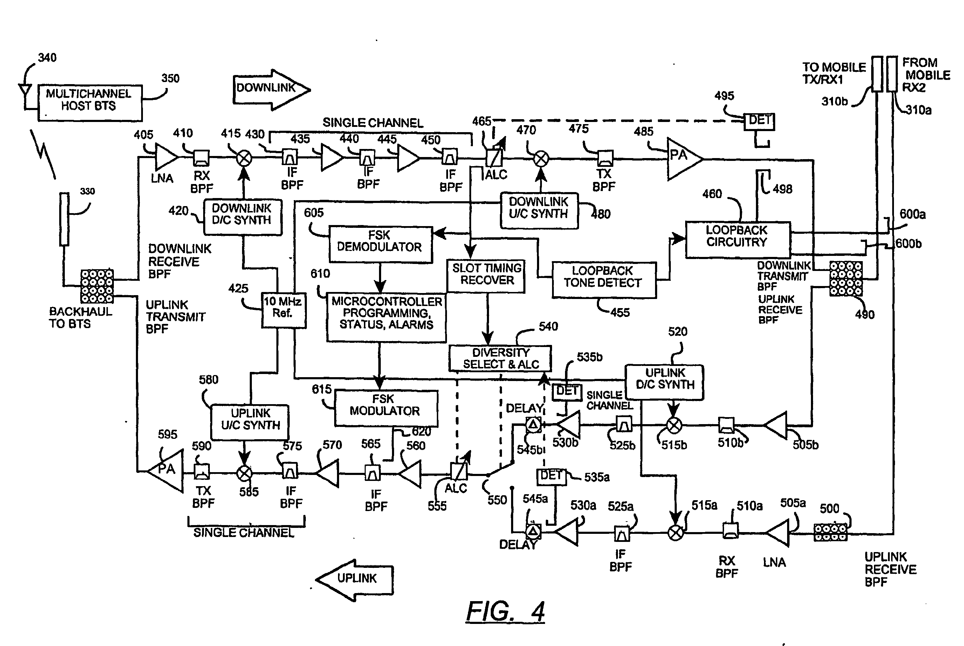

Fig. 4 is a detailed block diagram of the components of an exemplary in-band translator **320** employing the wireless in-band signaling of the present invention in a GSM-1900 wireless system. During normal operation, a modulated GMSK carrier from the multichannel host BTS **350** is continuously transmitted in the "backhaul" downlink to the remotely located in-band translating repeater 320. The repeater 320 receives this signal on the directional transmit/receive antenna 330 from the multichannel home base station **350** and forwards the signal to the duplexer 400. The RF signal output provided by the duplexer **400** is passed to a first low noise amplifier 405, receive bandpass filter 410, and mixer **415,** which is driven by downlink downconvert synthesizer **420,** which is phase-locked to 10 MHz reference **425.** Mixer 415 converts the downlink signals to an intermediate frequency, and intermediate bandpass filter **430** provides the first limitation of the transmit frequency of the downlink IF signal to a single channel. Intermediate frequency bandpass filters **440** and **450** additionally limit transmitted energy to the desired single channel, after receiving the signal from amplifiers **435** and **445** respectively. Loopback tone detector **455** accepts as an input a coupled signal from the output of the IF band pass filter **450** in the downlink signal path. The loopback tone detector **455** controls the loopback circuitry **460**, which couples and mixes signals from the transmit path into the two receive signal paths originating in the in-band translator **320** at the omnidirectional receive antennas **310a** and **310b.**

The output of the intermediate frequency bandpass filter **450** is forwarded to the automatic level control attenuator **465,** which feeds in sequence an RF mixer **470,** and transmit bandpass filter **475** where the signal is up-converted back to the RF transmit band, being in the present embodiment 1930-1990 MHz. Downlink up-convert synthesizer **480,** like all synthesizers in the in-band translator **320,** is phase-locked to a common 10 MHz reference **425.** The output of transmit bandpass filter **475** is in turn fed to the power amplifier **485** prior to being fed to the transmit portion of the duplexer **490,** ultimately out to the transmit/receive diversity antenna **310b,** where the "ground" downlink signal is transmitted to mobile station **380.** ALC attenuator **465** is controlled based on the energy output of power amplifier **485** measured by detector **495.**

In the uplink direction, the mobile station **380** returns a signal to the translator **320** via the pair of spatially diverse omnidirectional antennas, **310a** and **310b.** In the preferred embodiment shown in Fig. 3, omnidirectional antenna **310a** is receive only, while omnidirectional antenna **310b** is transmit/receive. Further in the preferred embodiment of the present invention, antennas **310a** and **310b** are spaced at least 8 wavelengths apart, or more than 4 feet at 1900 MHz, using the GSM-1900 standard of the current embodiment. A separate receive filter **500** and the receive portion of duplexer **490** provide a portion of the RF receive band to a pair of radio frequency (RF) signal processing chains consisting of a pair of low noise amplifiers (LNA) **505a, 505b,** receiver band-pass filter **510a, 510b** that limits the received energy to the desired RF band such as the GSM-1900 uplink band allocated from 1850 to 1910 MHz. The mixers **515a, 515b** which are driven by a first synthesizer, uplink downconvert synthesizer **520,** convert the received signals to an intermediate frequency, and IF band pass filters **525a, 525b,** limit the IF signal to a single channel. The mixers **515a, 515b,** IF band pass filters **525a, 525b,** and intermediate frequency amplifiers **530a, 530b,** comprise an IF stage.

Uplink downconvert synthesizer **520** and other synthesizers in the translator **320** share a common 10 MHz reference **425.** The IF center frequency is typically chosen to be approximately 188 MHz, with a 310 KHz channel bandwidth associated with the IF bandpass filters.

Detectors **535a** and **535b** measure the power of the filtered channel of the radio frequency energy of the two signals provided by the amplifiers **530a, 530b,** which are in turn fed to the diversity select and automatic level control (ALC) processor **540.** ALC processor **540** compares the instantaneous power level of the two signals fed to it by detectors **535a** and **535b.** Surface acoustic wave (SAW) delay elements **545a, 545b** delay the transmitted diversity signals from both amplifiers **530a** and **530b,** while the instantaneous power levels are compared by ALC processor **540.** ALC processor **540** performs slot-by-slot selection of the diversity signal with the higher power level and controls the operation of switch **550** so as to transmit the higher energy diversity signal to ALC alternator **555.** The process proceeds generally as follows for a GSM-type signal: the host multichannel BTS **350** will always transmit a Channel Combination V frame structure in time slot zero of the TDMA frame. The detection of time slot zero initiates a process of counting down signaling frames of the 51 multiframe control structure on physical channel 0. ALC processor **540** measures and integrates the energy during the first several bit periods for each diversity path. This integrated value is compared to a programmable threshold. If an integration exceeds the threshold, then ALC processor **540** select.s the path with the strongest signal as determiried by the integration. The programmable threshold is designed so that the integration of the first several bit periods of a random access control channel (RACH) burst will not exceed the threshold, due to the shorter duration and the delayed onset of the RACH bursts relative to the Normal Bursts. This programmable threshold can be a fixed threshold, or it can be made adaptive.

If the integration fails to exceed the programmable threshold, thereby indicating a RACH burst, and ALC processor 540 detects a time slot that can support a RACH burst, then the strongest available diversity path is selected in step 310, thereby synchronizing the RACH burst with the multichannel host BTS **350.** If ALC processor **540** detects a time slot other than a RACH burst time slot when the integration fails to exceed the programmable threshold, then the integration is zeroed or "dumped," and a successive integration is performed. This "integrate and dump" process is repeated until either a diversity selection is made, or a preset maximum number of "integrate and dump" intervals have been reached.

To complete the uplink processing in the translator **320,** the selected diversity signal from power switch **550** is sent through a fast automatic level control (ALC) attenuator **560.**

Transmit bandpass filters **565** and **575** limit transmitted energy to the desired single channel, after receiving the signal from amplifiers **560** and **570** respectively. At this point, uplink upconvert synthesizer **580** drives the mixer **585** by phase-locking to the common 10 NHz reference **425.** Uplink transmit bandpass filter **590** further limits transmitted energy to the desired RF frequency range and power amplifier **595** provides the output signal to duplexer **400.** Duplexer **400** transmits the signal to directional transmit/receive antenna **330,** for transmission to multichannel host BTS **350,** where the signal is received by omnidirectional antenna **340.**

Typically, class A/B linear amplifiers are used throughout the translator **320,** in both the forward and reverse paths, and the translator **320** is typically implemented with software-programmable synthesizers so that the channel settings deployed may be easily selected during installation or when the system needs to be reconfigured.

In accordance with the principles of the present invention, when the OMC **370** directs an RF loopback test, the multichannel host BTS **350** transmits a "signaling waveform," such as a continuous wave (CW) tone, for a predetermined amount of time over the "backhaul" downlink to the remotely located translator **320.** Phase/frequency discrimination circuitry in the loopback tone detector **455** is used to detect the change to a signaling waveform, e.g. CW carrier, from a modulated carrier, e.g. GSM. The presence of this signaling waveform instructs the remotely located in-band repeater-translator **320** to initiate its RF loopback mode.

Once in RF loopback mode, loopack circuitry **460** receives a coupled sample of the high power downlink transmit signal from coupler **498,** attenuates and downconverts the signal to the receive band, and couples the attenuated and downconverted signal into both of the uplink low-noise input paths at couplers **600a** and **600b.**

While in the loopback mode, the host BTS **350** will modulate the downlink signal with "training bit" data and/or send specific random access control channel (RACH) bursts on the downlink path and detect the looped-back bursts on the returned uplink signal. This process allows for accurate timing calculations of the round-trip delay to and from the remotely located repeater translator **320,** as well as a measure of signal strength and signal quality of the complete RF path. Since the remote repeater translator **320** captures all of its signal timing from the downlink signal, it is necessary to continue to send modulated "training bit" data in every slot of the TDMA frame while in loopback mode. If data is not sent in every frame, then the remote repeater translator **320** will lose synchronization with the host BTS **350.**

If there is an alarm within the remote repeater translator **320,** then the remote repeater translator **320** does not progress any further with the loopback function. After detecting a lack of activity, the BTS **350** will notify OMC **370** of a problem.

Further according to the principles of the present invention, when the preferred embodiment of the remote translator repeater **320** is in its loopback mode, the phase/frequency discrimination circuitry of the loopback tone detector **455** can also be used to detect phase/frequency modulated downlink data (such as FSK data), which can contain commands from the OMC **370** for action by the remote repeater **320.** In the preferred embodiment of Fig. 4, the loopback tone detector 455 directs the received downlink FSK-modulated data to FSK demodulator 605, which sends the demodulated data to the repeater's microcontroller **610.** Microcontroller **610** interprets the demodulated data as specific command signals and acts upon each specific signal appropriately. As examples, the FSK downlink data can be used to re-configure various tuning frequency and target gain parameters.

Also while in the loopback mode, status-indicating and alarm data can be sent back to OMC **370** via the uplink path to the host BTS **350.** Microcontroller **610** sends the status-indicating signal and alarm data to FSK modulator **615.** The FSK-modulated data can be coupled into the uplink path via coupler **620** as shown, or it can be directed into the uplink path via a switch (not shown). This FSK-modulated data can include internal status-indicating signals and alarm signals monitored by the microcontroller **610** of the remote repeater **320.**

Thus, the present invention discloses a method and apparatus for employing wireless in-band signaling for communications with a remotely located repeater, eliminating the requirement of installing a modem and a telephone line for each repeater in a wireless telecommunications system employing remote repeaters.

While the preferred embodiments of the invention have been illustrated and described, it will be clear that the invention is not so limited. Numerous modifications, changes, variations, substitutions and equivalents will occur to those skilled in the art without departing from the scope of the present invention as described in the claims.

## Claims

1. A wireless telecommunication system (300) comprising a plurality of cells (250), the cells (250) arranged into clusters (240) wherein one of said cells (250) within said cluster (240) contains a broadband base transceiver station (350), the cellular communication system (300) comprising:
a repeater (320) located in each of said cells (250) of the cluster (240) not containing said broadband base transceiver station (350), said repeater (320) including a demodulator (605) for in-band signal extraction of received signals originating from an operations and maintenance center (OMC), said signals including command data for said repeater (320) to act upon and a modulator (615) for in-band signal injection of at least one of status indicators and alarm data into signals to be transmitted to the operations and maintenance center OMC (370) through said broadband base transceiver station (350).

2. A wireless telecommunication system (300) as in claim 1, wherein said repeater (320) is a translating repeater that receives said signals at a first frequency and transmits said signals at a second frequency that is different than said first frequency.

3. A wireless telecommunication system (300) as in claim 1, wherein said repeater (320) further comprises a microcontroller (610) for interpreting demodulated data extracted by said demodulator (605) and for providing status-indicating signals and alarm data to said modulator (615) for said in-band signal injection.

4. A wireless telecommunication system (300) as in claim 1, wherein said wireless telecommunication system (300) supports at least one time division multiple access (TDMA) protocol.

5. A method of providing wireless communication between an operation and maintenance center OMC (370) and a wireless system repeater (320), in a wireless telecommunication system (300) comprising a plurality of cells (250), the cells (250) arranged into clusters (240) wherein one of said cells (250) within said cluster (240) contains a broadband base transceiver station BTS (350), said method comprising the steps of:
extracting command signals at said repeater (320) by receiving a modulated wireless downlink signal originating from said OMC (370), said modulated signal including in-band command data, said repeater (320) demodulating said modulated signal to detect and extract said command data; and
injecting at least one of status indicators and alarm data by said repeater (320) into signals to be transmitted to said OMC (370) through said BTS (350).

6. The method of providing wireless communication between an OMC (370) and a wireless system repeater (320) in accordance with claim 5, wherein:
said modulated signal comprises frequency shift key data.

7. The method of providing wireless communication between an OMC (370) and a wireless system repeater (320) in accordance with claim 5, wherein:
said step of receiving a modulated wireless downlink signal comprises receiving a continuous wave tone.

## Patentansprüche

1. Drahtloses Telekommunikationssystem (300) mit einer Vielzahl von Zellen (250), die in Clustern (240) angeordnet sind, wobei eine der Zellen (250) innerhalb des Clusters (240) eine Breitband-Transceiver-Basisstation (350) enthält, wobei das zellulare Kommunikationssystem (300) aufweist:
je einen in jeder Zelle (250) des Clusters (240), die die Breitband-Transceiver-Basisstation (350) nicht enthält, angeordneten Übertrager (320), wobei der Übertrager (320) einen Demodulator (605) zur In-Band-Signalgewinnung von empfangenen Signalen aufweist, die von einer Betriebs- und Wartungszentrale (OMC) stammen, wobei die Signale Befehlsdaten enthalten, auf die der Übertrager (320) reagieren soll, und der Übertrager (320) einen Modulator (615) zur In-Band-Signaleinbringung von Zustandsanzeigern und/oder Warndaten in Signale aufweist, die über die Breitband-Transceiver-Basisstation (350) zu der Betriebs- und Wartungszentrale OMC (370) übertragen werden sollen.

2. Drahtloses Telekommunikationssystem (300) nach Anspruch 1, wobei der Übertrager (320) ein Signalumsetzer ist, der die Signale auf einer ersten Frequenz empfängt und die Signale auf einer von der ersten Frequenz verschiedenen zweiten Frequenz überträgt.

3. Drahtloses Tetekommunikationssystem (300) nach Anspruch 1, wobei der Übertrager (320) ferner aufweist: einen Mikrokontroller (610) zum Interpretieren von durch den Demodulator (605) gewonnenen demodulierten Daten und zum Bereitstellen von Zustandsanzeigesignalen und Warndaten an den Modulator (615) für die In-Band-Signaleinbringung.

4. Drahtloses Telekommunikationssystem (300) nach Anspruch 1, wobei das drahtlose Telekommunikationssystem (300) zumindest ein Zeitmultiplex-Protokoll (TDMA-Protokoll) unterstützt.

5. Verfahren zum Bereitstellen von drahtloser Kommunikation zwischen einer Betriebs- und Wartungszentrale OMC (370) und einem Übertrager (320) für ein drahtloses System in einem drahtlosen Telekommunikationssystem (300) mit einer Vielzahl von Zellen (250), die in Clustem (240) angeordnet sind, wobei eine der Zellen (250) innerhalb des Clusters (240) eine Breitband-Transceiver-Basisstation BTS (350) enthält, wobei das Verfahren die Schritte aufweist:
Gewinnen von Befehlssignalen bei dem Übertrager (320) durch Empfangen eines modulierten Signals im drahtlosen Downlink, das aus der OMC (370) stammt, wobei das modulierte Signal ln-Band-Befehlsdaten enthält und der Übertrager (320) das modulierte Signal zum Erfassen und Gewinnen der Befehlsdaten demoduliert; und
Einbringen von Zustandsanzeigern und/oder Warndaten mittels des Übertragers (320) in Signale, die durch die BTS (350) zu der OMC (370) übertragen werden sollen.

6. Verfahren zum Bereitstellen von drahtloser Kommunikation zwischen einer OMC (370) und einem Übertrager (320) für ein drahtloses System gemäß Anspruch 5, wobei:
das modulierte Signal Daten zur Frequenzumtastung aufweist.

7. Verfahren zum Bereitstellen vor drahtloser Kommunikation zwischen einer OMC (370) und einem Übertrager (320) für ein drahtloses System gemäß Anspruch 5, wobei:
der Schritt des Empfangens eines modulierten Signals im drahtlosen Downlink das Empfangen eines kontinuierlichen Tons aufweist.

## Revendications

1. Système de télécommunications sans fil (300) comprenant une pluralité de cellules (250), les cellules (250) étant agencées en grappes (240), dans lequel une desdites cellules (250) à l'intérieur de ladite grappe (240) contient une station émettrice-réceptrice de base à large bande (350), le système de communication cellulaire (300) comprenant :
un répéteur (320) disposé à l'intérieur de chacune desdites cellules (250) de la grappe (240) ne contenant pas ladite station émettrice-réceptrice de base à large bande (350), ledit répéteur (320) comprenant un démodulateur (605) pour l'extraction de signaux intrabande de signaux reçus en provenance d'un centre d'exploitation et de maintenance (OMC), lesdits signaux comprenant des données de commande auxquelles ledit répéteur (320) doit réagir, et un modulateur (615) pour l'injection de signaux intrabande d'au moins une des données des indicateurs d'état et d'alerte dans des signaux qui doivent être transmis vers le centre d'exploitation et de maintenance OMC (370) par le biais de ladite station émettrice-réceptrice de base à large bande (350).

2. Système de télécommunications sans fil (300) selon la revendication 1, dans lequel ledit répéteur (320) est un répéteur traducteur qui reçoit lesdits signaux à une première fréquence et qui transmet lesdits signaux à une deuxième fréquence qui est différente de ladite première fréquence.

3. Système de télécommunications sans fil (300) selon la revendication 1, dans lequel ledit répéteur (320) comprend en outre un micro contrôleur (610) pour interpréter des données démodulées extraites par ledit démodulateur (605) et pour fournir des signaux indicateurs d'état et des données d'alerte audit modulateur (615) pour ladite injection de signaux intrabande.

4. Système de télécommunications sans fil (300) selon la revendication 1, dans lequel ledit système de télécommunications sans fil (300) supporte au moins un protocole d'accès multiple par répartition dans le temps (TDMA).

5. Procédé destiné à fournir une communication sans fil entre un centre d'exploitation et de maintenance OMC (370) et un répéteur de télécommunications sans fil (320) dans un système de télécommunications sans fil (300) comprenant une pluralité de cellules (250), les cellules (250) étant agencées en grappes (240), dans lequel une desdites cellules (250) à l'intérieur de ladite grappe (240) contient une station émettrice-réceptrice de base à large bande BTS (350), ledit procédé comprenant les étapes consistant à :
extraire des signaux de commande au niveau dudit répéteur (320) en recevant un signal modulé sans fil par liaison descendante provenant dudit OMC (370), ledit signal modulé comprenant des données de commande intrabande, ledit répéteur (320) démodulant ledit signal modulé pour détecter et extraire lesdites données de commande ; et
injecter au moins une des données des indicateurs d'état et d'alerte par ledit répéteur (320) dans des signaux qui doivent être transmis vers ledit OMC (370) par le biais de ladite BTS (350).

6. Procédé destiné à fournir une communication sans fil entre un OMC (370) et un répéteur de système sans fil (320) selon la revendication 5, dans lequel :
ledit signal modulé comprend des données à déplacement de fréquence.

7. Procédé destiné à fournir une communication sans fil entre un OMC (370) et un répéteur de système sans fil (320) selon la revendication 5, dans lequel :
ladite étape de réception d'un signal modulé sans fil par liaison descendante comprend l'étape consistant à recevoir une tonalité d'onde continue.
